# EUROPEAN PATENT APPLICATION

(11) **EP 4 851 107 A1**
(43) Date of publication of application: **09.12.2026**
(21) Application number: 25748132.5
(22) Date of filing: 24.01.2025
(51) Int. Cl.: C01B 17/027, B09B 3/10

(54) **SULFUR RECOVERING METHOD AND SULFUR RECYCLING SYSTEM**

(30) Priority: 31.01.2024 JP 2024013669
(71) Applicant: BRIDGESTONE CORPORATION, Chuo-ku Tokyo 104-8340 (JP)
(72) Inventor: HAYAKAWA, Kotaro, Tokyo 104-8340 (JP)
(74) Representative: Marks & Clerk LLP
(86) International application number: PCT/JP2025/002321
(87) International publication number: WO 2025/164550

(57) **Abstract**

With the aim of providing a method for recovering sulfur that does not require treatment under high-temperature conditions and can reduce CO₂ emissions, a method for recovering sulfur from a used desulfurizing agent includes extracting and recovering sulfur from the desulfurizing agent using a solvent including carbon disulfide.

## Description

### TECHNICAL FIELD

The present disclosure relates to a method for recovering sulfur and a sulfur recycling system.

### BACKGROUND

In addressing environmental issues, there is a demand for the conversion of tire raw materials to those derived from non-fossil fuels and inexhaustible resources. The same applies to sulfur, which is one of the raw materials for tires, and alternative technologies are needed. For example, as a new energy source to replace fossil fuels, sulfur recycling systems using biomass have been studied, and by using such technologies, it is possible to obtain sustainable sulfur.

Among biomass fuels, gaseous fuels, namely biogas, are gases obtained by fermentation (methane fermentation), anaerobic digestion, and the like. Biogas is not only an inexhaustible renewable resource, but also, since the fuel components (such as methane) in the gas can be used as is or converted to electricity by combustion, it is expected to be a highly versatile energy source. Typically, such biomass fuels as described above contain sulfur compounds, particularly hydrogen sulfide, due to the raw materials and production processes. Since this hydrogen sulfide causes adverse effects such as corrosion of peripheral equipment, it is mainstream to remove (desulfurize) it before using it as energy (see, for example, PTL 1).

It is known that sulfur undergoes a vulcanization reaction with double bond-containing polymers. Such vulcanization technology has been widely used, especially in the rubber field, and has supported industrial development. Sulfur used for industrial purposes is mainly produced from hydrogen sulfide, which is a by-product during the hydrodesulfurization of crude oil, that is, it is derived from fossil resources. From the viewpoint of maintaining the global environment and realizing a sustainable society, it is also essential to construct a recycling system for such sulfur. In this regard, for example, hydrogen sulfide contained in biogas is currently removed as described above, and technologies for recycling sulfur from such removed hydrogen sulfide are currently being developed and studied.

### CITATION LIST

### Patent Literature

PTL 1: JP 2012-101139 A
PTL 2: JP 2003-514952 A

### SUMMARY

### (Technical Problem)

However, when examining sulfur recycling technologies as described above, although sulfur derived from biomass can be obtained, conventional methods are used for the step of recovering sulfur from the removed hydrogen sulfide. As such a sulfur recovery method, for example, a technique is known in which the Claus process is performed under high-temperature conditions to recover sulfur, as disclosed in PTL 2. When the Claus process is used, efficient energy utilization is possible in the process of producing sulfur from crude oil, but when applied to the recovery of sulfur derived from biomass, a large amount of energy is required to achieve high-temperature conditions. As a result, there have been further issues in terms of the environment and operation, such as increased CO₂ emissions.

Therefore, it is an object to provide a method for recovering sulfur that does not require treatment under high-temperature conditions and can reduce CO₂ emissions. Another object of the present disclosure is to provide a sulfur recycling system using biomass, which incorporates the sulfur recovery method of the present disclosure, can reduce CO₂ emissions, and is constructed to be industrially applicable.

### (Solution to Problem)

The gist configuration of the present disclosure for solving the above problems is as follows. A method for recovering sulfur from a used desulfurizing agent, comprising extracting and recovering sulfur from the desulfurizing agent using a solvent including carbon disulfide. The method for recovering sulfur having the above configuration does not require treatment under high-temperature conditions and can reduce CO₂ emissions.

A sulfur recycling system using biomass, comprising: a desulfurization step of desulfurizing biomass or a treated biomass material to remove a sulfur-containing substance from the biomass or the treated biomass material; a recovery step of recovering sulfur from desulfurization treatment residue generated in the desulfurization step; a processing step of processing the sulfur that has been recovered into sulfur for vulcanization; a kneading step of kneading the sulfur for vulcanization with a double bond-containing polymer; and a vulcanization step of vulcanizing the double bond-containing polymer, wherein the recovery step of recovering the sulfur includes extracting and recovering sulfur from the desulfurizing agent using a solvent including carbon disulfide. The sulfur recycling system having the above configuration can reduce CO₂ emissions and can be constructed as a sulfur recycling system using biomass that is industrially applicable.

### (Advantageous Effect)

According to the present disclosure, it is possible to provide a method for recovering sulfur that does not require treatment under high-temperature conditions and can reduce CO₂ emissions. Further, according to the present disclosure, it is possible to provide a sulfur recycling system using biomass, which incorporates the sulfur recovery method of the present disclosure, can reduce CO₂ emissions, and is constructed to be industrially applicable.

### BRIEF DESCRIPTION OF THE DRAWINGS

In the accompanying drawings:

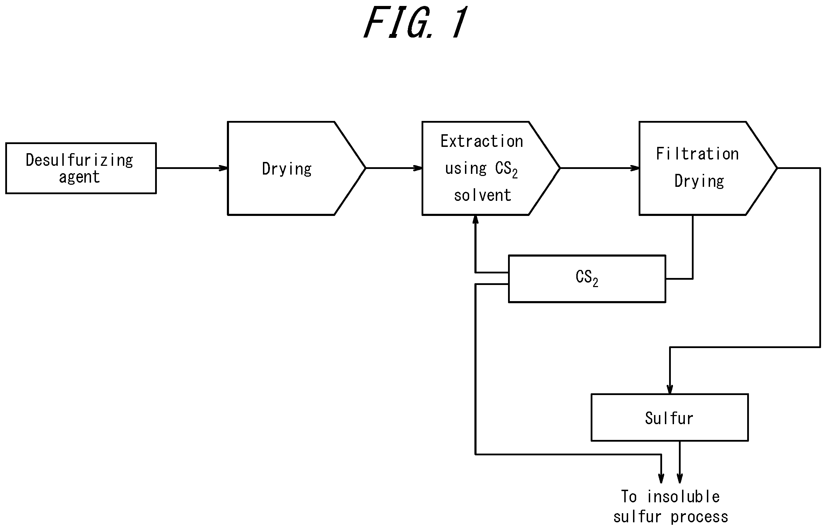

FIG. 1 is a flow diagram illustrating the process of recovering sulfur from a used desulfurizing agent according to one embodiment of the present disclosure.

### DETAILED DESCRIPTION

Hereinafter, a specific example of one embodiment of the method for recovering sulfur and sulfur recycling system (hereinafter, sometimes simply referred to as the "recovery method" and "recycling system") of the present disclosure will be described in detail. Here, FIG. 1 schematically illustrates the flow of the method for recovering sulfur according to one embodiment of the present disclosure.

### (Sulfur Recovery Method)

The method for recovering sulfur of the present disclosure is a method for recovering sulfur from a used desulfurizing agent. The present disclosure is characterized in that, as illustrated in FIG. 1, sulfur is extracted and recovered from the desulfurizing agent using a solvent including carbon disulfide (CS₂).

When the inventor studied a method for recovering sulfur from a used desulfurizing agent, it was found that hydrogen sulfide (H₂S) adsorbed on the desulfurizing agent is isolated as sulfur (S) over time. Further, as a result of further intensive research, it was discovered that extraction can be performed relatively easily using a solvent including carbon disulfide (CS₂) without processes such as pulverizing the desulfurizing agent or treating the desulfurizing agent under high-temperature conditions. As a result, the method for recovering sulfur of the present disclosure does not require complicated processes or treatment under high-temperature conditions, so sulfur can be recovered by a relatively simple process, and CO₂ emissions can be reduced.

The desulfurizing agent used for sulfur recovery is not particularly limited as long as it is a desulfurizing agent that has been used. From the viewpoint of sustainability, for example, a desulfurizing agent that has been used for the purpose of removing hydrogen sulfide generated as a by-product and disposed of after use may be used, or a desulfurizing agent that has been used for desulfurization of biomass or a treated biomass material may be recovered and used.

The solvent used for the extraction of sulfur is carbon disulfide (CS₂). The carbon disulfide is a sulfur compound of carbon and is a colorless, volatile liquid. By using carbon disulfide as the solvent, sulfur can be extracted simply by stirring in the solvent, and since the used solvent can be reused, it is effective from the viewpoint of reducing CO₂ emissions and minimizing the manufacturing process. In addition, since it does not contain components corresponding to carcinogenic substances such as carbon tetrachloride, sulfur can be recovered safely. The conditions for the carbon disulfide are not particularly limited, and those conventionally used as solvents can be appropriately selected and used.

The conditions for the extraction of sulfur are also not particularly limited except that carbon disulfide (CS₂) is used as the solvent. For example, the desulfurizing agent is stirred while being immersed in a solvent including carbon disulfide. The temperature of the solvent at that time is also not particularly limited, but it is preferable that it does not exceed the boiling point of carbon disulfide (46°C or lower). After stirring, sulfur precipitated in the solvent is extracted (preferably, filtration and drying as described below are performed), so that sulfur can be extracted and recovered.

Furthermore, in the sulfur recovery method of the present disclosure, as illustrated in FIG. 1, it is preferable to dry the desulfurizing agent prior to the extraction of sulfur. By removing moisture from the desulfurizing agent by drying, the extraction of sulfur is promoted, so that the amount of sulfur extracted and the sulfur extraction rate can be increased.

The conditions for the drying are not particularly limited as long as moisture in the desulfurizing agent can be eliminated (reduced) and can be appropriately adjusted according to the moisture content of the desulfurizing agent. For example, by performing a drying treatment at 70°C or higher for 50 hours or more, the moisture content of the desulfurizing agent can be reduced, and the subsequent sulfur extraction treatment can be effectively performed.

If necessary, a step of pulverizing (or crushing) the desulfurizing agent prior to the extraction of sulfur may be provided. In the method for recovering sulfur of the present disclosure, since sulfur can be extracted using a solvent including carbon disulfide (CS₂) without pretreatment such as pulverization, complicated processes can be eliminated. Therefore, in the method for recovering sulfur of the present disclosure, the desulfurizing agent can be immersed in the solvent including carbon disulfide as is. However, depending on the size of the container, the desulfurizing agent may be cut or broken into an appropriate size.

Furthermore, in the method for recovering sulfur of the present disclosure, as illustrated in FIG. 1, after extracting sulfur from the desulfurizing agent using a solvent including carbon disulfide, filtration and drying are performed. Since the extraction solution after extracting sulfur contains both carbon disulfide and sulfur, sulfur can be separated by filtration, and sulfur (recovered sulfur) can be obtained by drying. The conditions for filtration and drying are not particularly limited and can be appropriately selected according to the required performance. For example, for drying, after concentration under reduced pressure with an evaporator, drying under reduced pressure at 40°C for 12 hours can be performed.

In addition, in the method for recovering sulfur of the present disclosure, it is preferable to obtain insoluble sulfur using the sulfur that has been filtered and dried after extraction (recovered sulfur). This is because sulfur with higher purity and excellent industrial utility can be obtained. The step of obtaining the insoluble sulfur may include, for example, heating the recovered sulfur to obtain liquid sulfur, dissolving the liquid sulfur in carbon disulfide, and then heating, cooling, and drying the resulting solution.

Furthermore, in the method for recovering sulfur of the present disclosure, as illustrated in FIG. 1, after extracting sulfur from the desulfurizing agent using a solvent including carbon disulfide and performing filtration, the carbon disulfide obtained at that time, that is, the carbon disulfide used for the extraction of sulfur, can be recovered and subsequently used as a solvent for dissolving the liquid sulfur in the step of obtaining the insoluble sulfur. The carbon disulfide can thus be reused, which is effective from the viewpoint of manufacturing cost and recycling.

In the method for recovering sulfur of the present disclosure, in addition to the steps illustrated in FIG. 1, treatments usually performed in sulfur recovery can be appropriately carried out according to the required performance of the sulfur.

### (Sulfur Recycling System)

The sulfur recycling system of the present disclosure is a sulfur recycling system using biomass. The recycling system of the present disclosure includes a step of desulfurizing biomass or a treated biomass material to remove a sulfur-containing substance from the biomass or the treated biomass material (desulfurization step), a step of recovering sulfur from desulfurization treatment residue generated in the desulfurization step (recovery step), a step of processing the recovered sulfur into sulfur for vulcanization (processing step), a step of kneading the sulfur for vulcanization with a double bond-containing polymer (kneading step), and a step of vulcanizing the double bond-containing polymer (vulcanization step). The recycling system of the present disclosure can be applied to the rubber field requiring vulcanization using sulfur, including tires.

Although the present disclosure relates to sulfur recycling, in many cases, nitrogen-containing substances such as ammonia are also generated from the biomass used in the present disclosure. Therefore, in the recycling system of the present disclosure, nitrogen recycling can also be performed in combination.

In the present specification, "biomass" typically refers to organic resources derived from animals and plants, meaning substances other than fossil resources (such as petroleum, coal, and natural gas). The biomass is not particularly limited, but for example, animal excreta, sewage, food waste, microalgae, black liquor, paper, sawmill residues, construction wood waste, non-edible parts of crops, and forest residues can be widely used.

As the recycling raw material to be supplied to the recycling system of the present disclosure, either the biomass itself may be used, or a material obtained by subjecting the biomass to some treatment (defined as "treated biomass material" in this specification) may be used, or both may be used in combination. Here, the above treatment is preferably a treatment that converts the biomass into a form that is easier to use. For example, as the treated biomass material, biogas obtained by subjecting biomass such as animal excreta, sewage, and food waste to methane fermentation can be mentioned. The methane fermentation can be performed by known methods. The biogas obtained by the methane fermentation typically contains, together with methane as a fuel component, sulfur-containing substances mainly composed of hydrogen sulfide. Further, as the treated biomass material, oils and fats produced by microalgae such as Euglena can be mentioned. The oils and fats produced by the microalgae typically contain, together with oils and fats such as wax esters, sulfur-containing substances mainly composed of hydrogen sulfide.

In the recycling system of the present disclosure, the recycling raw material (treatment subject), i.e., the biomass or treated biomass material, may be a single type or a combination of two or more types.

### (Desulfurization Step and Recovery Step)

In the recycling system of the present disclosure, the desulfurization step is a step of desulfurizing biomass or a treated biomass material to remove a sulfur-containing substance from the biomass or the treated biomass material. In the desulfurization step, desulfurization treatment residue is usually generated. The recovery step is a step of recovering sulfur from the desulfurization treatment residue generated in the desulfurization step. That is, in the recovery step, sulfur is recovered as elemental sulfur.

The recycling system of the present disclosure is premised on using biomass or a treated biomass material containing a sulfur-containing substance as the recycling raw material. The sulfur-containing substance contained in the biomass or treated biomass material, or the sulfur-containing substance removed in the desulfurization step, is not particularly limited as long as it contains sulfur as a constituent element, and examples include hydrogen sulfide and sulfur dioxide. The sulfur-containing substance removed in the desulfurization step may be a single type or a combination of two or more types.

The means for desulfurization in the desulfurization step is not particularly limited as long as it can remove the sulfur-containing substance from the recycling raw material (biomass or treated biomass material). As an example, desulfurization can be performed by bringing the recycling raw material (biomass or treated biomass material) into contact with a contact medium selected from adsorbents, solvents, and bacteria. These contact media may be used alone or in combination of two or more. Hereinafter, embodiments of the desulfurization step and the recovery step will be described in detail for each contact medium used.

As the adsorbent used as the contact medium, any material capable of selectively treating (adsorbing) the sulfur-containing substance may be used, and specific examples include iron oxide, zinc ferrite, and zeolite. The adsorbent may be used alone or in combination of two or more.

As an example, when iron oxide is used as the adsorbent, hydrogen sulfide can be converted to iron sulfide by contact during the desulfurization step. In this case, the desulfurization treatment residue corresponds to the adsorbent containing iron sulfide. Thereafter, in the recovery step, the iron sulfide in the desulfurization treatment residue is reacted with a strong acid to revert to hydrogen sulfide, and then sulfur can be recovered from the hydrogen sulfide by a known method. In addition, in the desulfurization treatment residue (adsorbent containing iron sulfide) in the above case, the sulfur content may be present not only as iron sulfide but also as elemental sulfur. Sulfur can also be recovered from such an adsorbent containing elemental sulfur by a known method.

As another example, when zeolite is used as the adsorbent, hydrogen sulfide can be physically adsorbed directly onto the zeolite by contact during the desulfurization step. In this case, the desulfurization treatment residue corresponds to the adsorbent containing hydrogen sulfide. Thereafter, in the recovery step, hydrogen sulfide is recovered by exposing the desulfurization treatment residue to reduced pressure and high temperature, and then sulfur can be recovered from the hydrogen sulfide by a known method.

Adsorbents such as iron oxide are advantageous in that the sulfur recovery efficiency is relatively high.

The method by which sulfur is recovered from hydrogen sulfide is by implementing the method for recovering sulfur of the present disclosure described above. The recovery conditions are as described above.

As the solvent used as the contact medium, any material capable of selectively treating (absorbing or extracting) the sulfur-containing substance may be used, and specific examples include monoethanolamine, diethanolamine, and methyldiethanolamine. The solvent may be used alone or in combination of two or more. The solvent may also be diluted with water and used as an aqueous solution.

As an example, when monoethanolamine is used as the solvent, hydrogen sulfide can be absorbed by contact during the desulfurization step. In this case, the desulfurization treatment residue corresponds to the solvent that has absorbed hydrogen sulfide. Thereafter, in the recovery step, hydrogen sulfide is separated by heating the desulfurization treatment residue, and then sulfur can be recovered from the hydrogen sulfide by a known method (for example, the above-mentioned Claus process). The same applies when diethanolamine or methyldiethanolamine is used as the solvent.

Solvents such as monoethanolamine are advantageous in that they can be used again as the contact medium after heating in the recovery step.

As the bacteria used as the contact medium, any bacteria capable of selectively treating the sulfur-containing substance may be used, and specific examples include sulfur-oxidizing bacteria. More specifically, for example, sulfur-oxidizing bacteria described in Takuro Kobayashi et al., "Desulfurization of Biogas under Microaerobic Conditions in Methane Fermentation Tanks Using Sulfur-Oxidizing Bacteria" (Journal of JSCE G, Vol. 65, No. 2, 104-113, June 2009) can be mentioned. The bacteria may be used alone or in combination of two or more.

As an example, when sulfur-oxidizing bacteria are used as the bacteria, hydrogen sulfide can be oxidized to generate sulfur by contact during the desulfurization step. In this case, the desulfurization treatment residue corresponds to the bacteria containing sulfur. Thereafter, in the recovery step, after lysing the desulfurization treatment residue using a cell lysis solution containing a surfactant or the like, sulfur can be recovered by extracting sulfur with a solvent. Solvents used for the extraction include carbon disulfide and toluene.

Bacteria are advantageous in that the maintenance cost is relatively low.

### (Processing Step)

The processing step is a step of processing the recovered sulfur into sulfur for vulcanization. The processing step can employ known techniques. For example, in the processing step, after dissolving the recovered sulfur (elemental sulfur) in carbon disulfide, heating, rapid cooling, separation, and drying are performed, and oil treatment may be performed as necessary to obtain insoluble sulfur (sulfur for vulcanization).

### (Kneading Step)

The kneading step is a step of kneading the sulfur for vulcanization with a double bond-containing polymer.

As the double bond-containing polymer, polymers widely used in the rubber field including tires can be mentioned. Specifically, examples of the double bond-containing polymer include natural rubber (NR), butadiene rubber (BR), styrene-butadiene rubber (SBR), isoprene rubber (IR), chloroprene rubber (CR), acrylonitrile-butadiene rubber (NBR), halogenated butyl rubber, ethylene propylene diene rubber (EPDM), and the like. The double bond-containing polymer may be used alone or in combination of two or more.

In the kneading step, in addition to the above sulfur for vulcanization and double bond-containing polymer, various compounding agents such as vulcanizing co-agents such as stearic acid, vulcanization accelerators, vulcanization accelerator co-agents such as zinc oxide, age resistors, oil, softeners, plasticizers, and processability improvers may be appropriately compounded and kneaded according to the purpose.

The kneading method is not particularly limited, and kneading can be performed using a kneader such as a roll, internal mixer, or Banbury rotor.

### (Vulcanization Step)

The vulcanization step is a step of vulcanizing the double bond-containing polymer kneaded with the sulfur for vulcanization. In this step, the above sulfur for vulcanization functions as a vulcanizing agent.

The vulcanization temperature is not particularly limited and is usually 130°C or higher and 180°C or lower. The vulcanization time is not particularly limited and is usually 5 minutes or longer and 120 minutes or shorter.

### EXAMPLES

### [Example 1]

300 mL of carbon disulfide was added to 444.60 g (solid content 300.41 g) of a desulfurizing agent containing water, and the mixture was stirred at room temperature for 2 hours. Thereafter, filtration was performed using PTFE filter paper (pore size 10 µm), the solid was extracted, and the extracted solid was dried under reduced pressure using an evaporator. The weight (g) of the extracted solid and the ratio (%) of the weight of the extracted solid to the solid content of the desulfurizing agent are presented in Table 1. The extracted solid obtained was confirmed to be sulfur by XRD measurement, and the trace metal components in the dried weight were quantitatively analyzed by IPC measurement.

### [Example 2]

989.50 g of a desulfurizing agent containing water was subjected to vacuum drying at 75°C for 5 hours to obtain a dried desulfurizing agent (weight 678.08 g). Then, after taking 300.26 g from the dried desulfurizing agent, 300 mL of carbon disulfide was added, and the mixture was stirred at room temperature for 2 hours. Thereafter, filtration was performed using PTFE filter paper (pore size 10 µm), the solid was extracted, and the extracted solid was dried under reduced pressure using an evaporator. The weight (g) of the extracted solid and the ratio (%) of the weight of the extracted solid to the solid content of the desulfurizing agent are presented in Table 1. The obtained sulfur was confirmed to be sulfur by XRD measurement, and the trace metal components in the dried weight were quantitatively analyzed by IPC measurement.

**[Table 1]**

| | Desulfurizing agent before drying | Desulfurizing agent after drying | Extracted solid | Extracted solid /desulfurizing agent after drying |
|---|---|---|---|---|
| Example 1 | 444.6 g (solid content 300.41 g) | - | 3.6 g | 1.20% |
| Example 2 | - | 300.26 g | 33.22 g | 11.00% |

From the results in Table 1, it was found that in both sulfur extraction methods of Examples 1 and 2, sulfur could be recovered without treatment under high-temperature conditions. In addition, in the sulfur extraction method of Example 2, it was found that sulfur could be recovered more efficiently by performing a drying treatment of the desulfurizing agent in advance.

### INDUSTRIAL APPLICABILITY

According to the present disclosure, it is possible to provide a method for recovering sulfur that does not require treatment under high-temperature conditions and can reduce CO₂ emissions. Further, according to the present disclosure, it is possible to provide a sulfur recycling system using biomass, which incorporates the sulfur recovery method of the present disclosure, can reduce CO₂ emissions, and is constructed to be industrially applicable.

## Claims

1. A method for recovering sulfur from a used desulfurizing agent, comprising extracting and recovering sulfur from the desulfurizing agent using a solvent including carbon disulfide.

2. The method for recovering sulfur according to claim 1, wherein the desulfurizing agent is dried prior to the extracting of the sulfur.

3. The method for recovering sulfur according to claim 1 or 2, wherein the sulfur that has been recovered is heated to obtain liquid sulfur, the liquid sulfur is dissolved in carbon disulfide, and a resulting solution is heated, cooled, and dried to obtain insoluble sulfur.

4. The method for recovering sulfur according to claim 3, wherein the carbon disulfide used for the extracting of the sulfur is subsequently used as a solvent for dissolving the liquid sulfur.

5. The method for recovering sulfur according to claim 1 or 2, wherein the extracting of the sulfur does not include a step of pulverizing the desulfurizing agent.

6. The method for recovering sulfur according to claim 1 or 2, wherein the used desulfurizing agent is a desulfurizing agent that has been used for desulfurization of biomass or a treated biomass material.

7. A sulfur recycling system using biomass, comprising:
a desulfurization step of desulfurizing biomass or a treated biomass material to remove a sulfur-containing substance from the biomass or the treated biomass material;
a recovery step of recovering sulfur from desulfurization treatment residue generated in the desulfurization step;
a processing step of processing the sulfur that has been recovered into sulfur for vulcanization;
a kneading step of kneading the sulfur for vulcanization with a double bond-containing polymer; and
a vulcanization step of vulcanizing the double bond-containing polymer, wherein
the recovery step of recovering the sulfur includes extracting and recovering sulfur from the desulfurizing agent using a solvent including carbon disulfide.

8. The sulfur recycling system according to claim 7, wherein the sulfur-containing substance is selected from hydrogen sulfide and sulfur dioxide.

9. The sulfur recycling system according to claim 7 or 8, wherein the biomass is selected from animal excreta, sewage, food waste, and microalgae.
